# FASCICULE DE BREVET EUROPEEN

(11) **EP 3 473 356 B1**
(45) Date de publication et mention de la délivrance du brevet: **10.03.2021**
(21) Numéro de dépôt: 18201335.9
(22) Date de dépôt: 18.10.2018
(51) Int. Cl.: B22F 1/00, B22F 3/00, B22F 3/10, C04B 35/626, C04B 35/63, C04B 35/634, B33Y 70/00, C04B 35/622

(54) **PATE DESTINÉE A ETRE UTILISÉE DANS UN PROCEDÉ DE STEREOLITHOGRAPHIE POUR FABRIQUER UNE PIECE METALLIQUE OU EN CÉRAMIQUE**
PASTE ZUR VERWENDUNG IN EINEM STEREOLITHOGRAPHIEVERFAHREN ZUR HERSTELLUNG EINES METALL- ODER KERAMIKTEILS
PASTE FOR USE IN A STEREOLITHOGRAPHY METHOD FOR MANUFACTURING A CERAMIC OR METAL PART

(30) Priorité: 19.10.2017 FR 1759839
(43) Date de publication de la demande: 24.04.2019
(73) Titulaire: Commissariat à l'énergie atomique et aux énergies alternatives, 75015 Paris (FR)
(72) Inventeur: ROUMANIE, Maryline, 38500 COUBLEVIE (FR)
(74) Mandataire: Brevalex

(56) Documents cités:
- CN-A- 107 158 474
- US-A1- 2002 176 793

## Description

L'invention concerne une pâte destinée à être utilisée dans un procédé de stéréolithographie pour fabriquer une pièce métallique ou en céramique. L'invention concerne également un procédé de fabrication d'une pièce métallique ou en céramique par stéréolithographie à partir d'une telle pâte.

Le titane et les alliages de titane sont connus pour avoir de bonnes propriétés mécaniques, une grande résistance à la corrosion, un faible module d'Young, une faible densité et une bonne biocompatibilité. Ces métaux répondent aux contraintes imposées dans de nombreux domaines, comme par exemple, dans l'aéronautique, l'aérospatiale ou encore dans le domaine médical, en particulier, celui des prothèses.

Classiquement, les pièces en titane ou en alliage de titane sont obtenues par fabrication additive par fusion sélective par laser (SLM). Il s'agit d'une des techniques les plus matures d'un point de vue industriel. Cependant, cette technique comme tout autre technique d'impression 3D par fusion présente les inconvénients suivants :
- la présence de contraintes résiduelles dans les pièces, suite à la fabrication, ce qui nécessite de réaliser un traitement thermique ultérieur,
- une mauvaise qualité de surface qui nécessite une étape de polissage,
- une distribution granulométrique spécifique des poudres qui entraine un coût non négligeable sur l'achat des matières premières,
- une gestion et une manipulation des poudres, pendant les étapes de polissage et de nettoyage, qui nécessite des précautions spécifiques de sécurité et pour la santé.

Afin de remédier à ces problématiques, la fabrication de pièces métalliques par stéréolithographie (SLA) s'est développée. Cette technique consiste à déposer sur un support une première couche de pâte, contenant une poudre métallique, une résine photopolymérisable, et un photoamorceur, et à polymériser cette couche dans une ou des zones choisies par l'action d'un rayonnement approprié généralement UV (typiquement 365nm). Il est ensuite superposé à cette première couche, une deuxième couche qui est traitée selon le même principe et ses opérations sont répétées jusqu'à former une pièce polymérisée en trois dimensions de la forme voulue.

Cependant, les particules de titane se couvrent naturellement d'une fine couche d'oxyde de titane, dont l'indice de réfraction est de 3,87, ce qui fait que les particules de titane absorbent le rayonnement ultra-violet. D'autres métaux, et certaines céramiques comme le Fe₂O₃, présentent également un coefficient d'absorption non nul à une longueur d'onde de 365nm. Il est donc difficile de réaliser la réticulation de la résine à 365nm avec de tels éléments car il y a une compétition entre, d'une part, l'absorption de la lumière UV par la poudre et, d'autre part, l'activation des photoamorceurs présents dans la formulation et donc la réticulation des acrylates. De plus, certains métaux ou céramiques peuvent avoir un indice de réfraction élevé (au moins deux fois supérieur) par rapport aux résines photoréticulables des compositions (par exemple 1,5 pour une résine acrylate). Cet écart d'indice de réfraction va conduire à ce que la poudre agisse comme une lentille convergente au sein de la composition, ce qui va limiter la diffusion du faisceau lumineux et diminuer la réactivité des résines. Les résines chargées avec de tels éléments présentent donc une faible réactivité.

Pour améliorer la réactivité de la pâte, il est possible de rajouter un composé particulier qui modifie les propriétés optiques de la poudre et le comportement de la pâte face aux ultra-violets.

Par exemple, dans le document FR-A-2811922, différentes pâtes destinées à être utilisées dans des procédés SLA sont décrites. Les pâtes comportent un liant constitué d'au moins une résine photopolymérisable, ayant une viscosité inférieure à 4000mPa.s, un photo-amorceur et une poudre métallique. La poudre métallique peut être, par exemple, en acier inoxydable, en titane, en nickel ou en alliage de titane. Pour améliorer la réactivité de la pâte, du polyéthylène ou du polyamide peuvent être ajoutés. La réactivité des différentes pâtes a été mesurée, mais les réactivités des pâtes contenant la poudre de titane ou en alliage de nickel n'ont pas été mesurées, ce qui semble indiquer que soit les réactivités sont trop longues, et donc que le procédé n'est pas industrialisable, soit les pièces n'ont pas pu être réalisées.

Dans l'article de Woo et al. ("Development of micro-stereolithography technology using metal powder", Microelectronic Engineering 83 (2006) 1253-1256), une composition contenant un photopolymère, un photoamorceur et une poudre métallique de cuivre (60% massique) est préparée pour former une pièce en cuivre par stéréolithographie. Comme la lumière ne peut pas pénétrer profondément dans une suspension métallique, seule la surface de la composition peut être polymérisée. Afin de remédier à cet inconvénient, 5% massique d'un dispersant, du Triton-X, a été ajouté à la composition pour favoriser la pénétration et la diffusion de la lumière au cœur de la composition, et donc améliorer la réactivité et permettre une polymérisation en profondeur. Il est également recommandé d'utiliser une composition ayant une viscosité inférieure à 3000mPa.s (telle que 100mPa.s) pour pouvoir facilement réaliser une pièce. Les épaisseurs de pâte sont de 25µm ou 50µm et la vitesse de déplacement du faisceau laser est de 10mm/min.

### EXPOSÉ DE L'INVENTION

C'est, par conséquent, un but de la présente invention de proposer une pâte remédiant aux inconvénients de l'art antérieur et permettant de fabriquer facilement des pièces métalliques ou en céramique à grande échelle.

Ce but est atteint par une pâte, destinée à être utilisée dans un procédé de stéréolithographie pour fabriquer une pièce métallique ou en céramique, comprenant une poudre de particules métalliques ou en céramique, un ou plusieurs précurseurs photopolymérisables d'une première résine, un photoamorceur et un additif optique, l'additif optique étant choisi parmi la silice, un polythiophène, un alcool polyvinylique, un polypropylène, et une seconde résine, préalablement réticulée et broyée.

Par métallique, on entend un métal ou un alliage de métal.

Par la suite, la poudre pourra définir soit la poudre métallique soit la poudre en céramique.

Grâce à la présence de l'un de ces additifs optiques particuliers, il est possible de fabriquer des pièces métalliques ou en céramique qui ne pourraient pas l'être avec les procédés de l'art antérieur pour lesquels la réactivité est insuffisante (typiquement supérieure à 30 secondes). La pâte, utilisée dans le procédé de l'invention, présente une réactivité inférieure à 30s, voire inférieure à 2s selon la nature de l'additif optique, ce qui permet de concurrencer, en terme de cadence, les procédés de type SLM, tout en évitant les inconvénients précités du procédé SLM. Il est, par exemple, possible d'obtenir des couches réticulées de 50µm en 0,5s en fonction du choix de l'additif.

La pâte est obtenue en mélangeant notamment un ou plusieurs précurseurs photopolymérisables d'une résine, qui sont visqueux, ou liquides, et une poudre métallique ou en céramique, ce qui assure une parfaite homogénéité du mélange. Les étapes de manipulation des poudres sont réduites et les risques écologiques et de santé liés à leur manipulation limités.

L'additif optique représente de 0,1% à 20% en poids par rapport à la poudre de particules métalliques ou en céramique. Avec de telles proportions, la quantité d'additif optique est suffisante pour diffuser la lumière et la pièce obtenue présente une faible porosité.

Avantageusement, l'additif optique est sous forme de particules, les particules ayant une plus grande dimension inférieure à 20µm, et de préférence inférieure ou égale à 10µm, et encore plus préférentiellement inférieure ou égale à 2µm. La pièce finale obtenue présente une faible porosité.

Avantageusement, les particules métalliques ou en céramique ont une plus grande dimension inférieure à 45µm, et de préférence inférieure à 25µm.

Avantageusement, les particules métalliques ou en céramique sont sphériques. Avec des particules sphériques, la réactivité des résines photosensibles est améliorée et la pièce finale présente une meilleure compacité et une plus forte densité.

Avantageusement, la poudre de particules métalliques ou en céramique représente au moins 35% volumique de la pâte, et de préférence de 40% à 60% volumique. La proportion de poudre de particules métalliques ou en céramique par rapport à la résine sera ajustée en fonction des propriétés mécaniques du matériau composite recherchées. Les pourcentages volumiques s'entendent ici et par la suite par rapport au volume total de la pâte.

Avantageusement, le ou les précurseurs photopolymérisables de la première résine sont de type acrylate, uréthane acrylate, polyétheracrylate modifié par une amine, époxyacrylate ou polyesteracrylate.

La seconde résine est de type acrylate. La seconde résine est facilement éliminée lors des traitements thermiques.

Avantageusement, la pâte a une viscosité supérieure ou égale à 10Pa.s à une vitesse de cisaillement de 100s⁻¹, à 25°C. La pâte est facile à étaler et suffisamment visqueuse pour former une couche homogène.

Avantageusement, la pâte comprend :
- 40% à 50% volumique de poudre de particules métalliques ou en céramique,
- 40% à 60% volumique d'un ou plusieurs précurseurs photopolymérisables d'une première résine,
- 0,1% à 10% volumique de photoamorceur,
- 0,5% à 10% en poids par rapport à la poudre de particules métalliques ou en céramique d'additif optique, l'additif optique étant de préférence du polypropylène, ou une seconde résine préalablement réticulée et broyée.

L'invention concerne également un procédé de fabrication d'une pièce métallique ou en céramique par stéréolithographie à partir d'une pâte telle que définie précédemment. Le procédé présente les avantages liés à la pâte.

Le procédé de fabrication d'une pièce métallique ou en céramique comprend au moins les étapes successives a), b), c) suivantes :
a) Mise en forme d'une pièce par stéréolithographie, la mise en forme étant réalisée en :
   a1) formant une couche de pâte, telle que définie précédemment,
   a2) photopolymérisant le ou les précurseurs photopolymérisables de la première résine,
   les étapes a1) et a2) formant un cycle pouvant être répété plusieurs fois,
b) Réalisation d'un premier traitement thermique à une première température T_{d} de manière à éliminer la première résine,
c) Réalisation d'un second traitement thermique à une deuxième température T_{f}, supérieure à la première température T_{d}, de manière à fritter les particules métalliques ou en céramique pour obtenir une pièce métallique ou en céramique.

Le procédé de fabrication d'une pièce métallique ou en céramique est simplifié et la pièce obtenue est plus homogène. La pièce obtenue, à l'issue de la mise en forme par stéréolithographie, est solide, elle comprend une première résine dans laquelle est dispersée la poudre métallique ou en céramique. Le procédé d'élaboration de type stéréolithographie, permet d'élaborer des pièces de formes variées et complexes. De plus, contrairement au procédé SLM, la fabrication des pièces métalliques ou en céramique par SLA ne passe pas par une étape de mélange de différentes poudres.

La température T_{d} est, par exemple, comprise dans la gamme allant de 300°C à 700°C et la température T_{f} est, par exemple, comprise dans la gamme allant de 1000°C à 1400°C. La température T_{d} dépend des liants mis en œuvre. La température de frittage du titane est spécifique, elle dépend de la méthode de préparation de la poudre, de la taille des particules et des adjuvants qui peuvent être ajoutées.

Avantageusement, l'étape a2) est réalisée sous irradiation UV pendant une durée inférieure à 30s, de préférence inférieure à 10s, et encore plus préférentiellement inférieure à 2s.

Avantageusement, la couche de pâte formée à l'étape a1) à une épaisseur allant de 20µm à 200µm.

Avantageusement, la couche de pâte a une épaisseur allant de 30µm à 50µm et l'irradiation UV est réalisée pendant une durée de 0,5s à 1s.

Avantageusement, l'étape a2) est réalisée avec un laser ou par traitement numérique de la lumière (DLP). L'utilisation d'une source lumineuse de DLP permet d'illuminer en une seule fois toute la pièce, ce qui simplifie le procédé, rend l'illumination et don la réticulation plus homogène et améliore la cadence de production.

### BRÈVE DESCRIPTION DES DESSINS

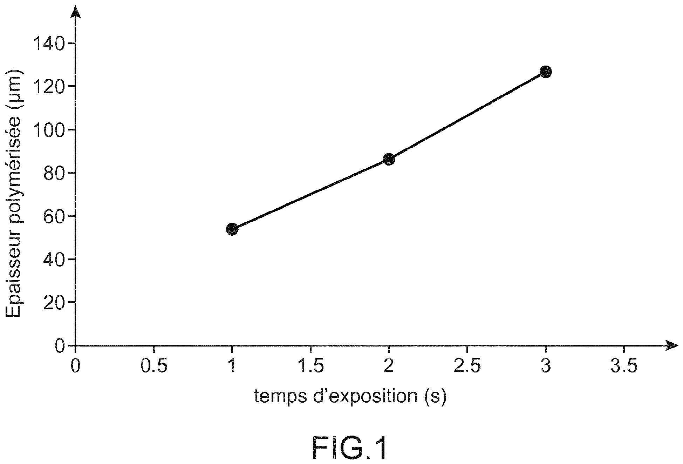

La présente invention sera mieux comprise sur la base de la description qui va suivre et de la figure 1 en annexe qui est un graphique représentant l'épaisseur d'une couche de pâte polymérisée en fonction du temps d'exposition, la pâte comprenant un additif optique selon l'invention.

### EXPOSÉ DÉTAILLÉ DE MODES DE RÉALISATION PARTICULIERS

L'invention porte sur un procédé d'élaboration d'une pièce métallique ou en céramique. Le procédé comprend au moins les étapes successives suivantes :
a) Mise en forme d'une pièce par stéréolithographie, la mise en forme étant réalisée en :
   a1) formant une couche de pâte, comprenant une poudre métallique ou en céramique, une résine photopolymérisable, un photoamorceur, et un additif optique l'additif optique étant choisi parmi la silice, les polythiophènes, une résine préalablement réticulée et broyée, du polypropylène, et de l'alcool polyvinylique,
   a2) photopolymérisant le ou les précurseurs photopolymérisables de la première résine de manière à former la première résine,
   les étapes a1) et a2) formant un cycle pouvant être répété plusieurs fois,
b) Réalisation d'un premier traitement thermique à une première température T_{d} sur la pièce de manière à éliminer la première résine,
c) Réalisation d'un second traitement thermique à une deuxième température T_{f}, supérieure à la première température T_{d}, de manière à fritter les particules pour obtenir une pièce métallique ou en céramique.

### Mise en forme de la pièce :

La pièce est mise en forme, à l'étape a), par stéréolithographie, c'est-à-dire qu'elle est obtenue par polymérisation successives de plusieurs couches de pâte.

La pâte comprend la poudre métallique ou en céramique, un ou plusieurs précurseurs photopolymérisables d'une première résine (aussi appelée liant polymérique ou liant organique), un ou plusieurs photo-initiateurs (ou photo-amorceurs) et un additif optique. La pâte est visqueuse, voire éventuellement liquide, et ses constituants sont, avantageusement, répartis d'une manière homogène.

L'additif optique permet de diffuser et/ou de réfléchir la lumière au sein de la couche pâte et donc d'améliorer la réactivité de la résine. L'additif optique est, par exemple, choisi parmi la silice (SiO₂), les polysiloxanes, les polythiophènes, une résine préalablement réticulée et broyée, du polypropylène, de l'alcool polyvinylique. De préférence, l'additif optique est du polypropylène ou une résine réticulée et broyée.

Le polypropylène peut être choisi parmi les polypropylènes classiquement utilisés pour les techniques de plasturgie, comme l'injection. A titre illustratif, on peut choisir un polypropylène commercialisé sous le nom HP500N par la société Basel ou encore un polypropylène commercialisé par la société Borealis.

Le polypropylène peut être fonctionnalisé. Par exemple, il est fonctionnalisé avec des groupements permettant une meilleure diffusion du rayonnement incident.

Avantageusement, lorsque l'additif optique est un polymère ou une résine, il sera éliminé lors de l'étape de déliantage, ce qui améliorera la compacité, la densité et la qualité de la pièce finale. De préférence, on choisira le polypropylène qui laisse très peu de résidus carbonés après l'étape de déliantage. Le polysiloxane est, avantageusement, un agent mouillant.

L'additif optique représente de 0,1% à 20% en poids par rapport aux particules métalliques ou en céramique pour avoir une pièce dense. Au-delà de 20%, après déliantage et frittage, on obtient une pièce poreuse.

Lorsque l'additif est sous forme de particules, celles-ci ont, de préférence, des dimensions inférieures à celle des particules de la poudre pour limiter la porosité dans les pièces finales pour avoir des pièces denses. Par exemple, les particules d'additif ont une plus grande dimension au moins deux fois plus petite, et de préférence au moins dix fois plus petite, que la plus grande dimension des particules de la poudre métallique ou céramique. Par exemple, les particules d'additif optique ont des dimensions inférieures ou égales à 10µm, par exemple de l'ordre de 1-2µm pour limiter la porosité de la pièce finale ou, par exemple, de l'ordre de 8µm pour avoir un matériau légèrement poreux. De préférence, les particules d'additif optique ont une plus grande dimension inférieure ou égale à 2µm, en particulier pour les poudres métalliques.

Selon une première variante, la poudre métallique est, par exemple, une poudre de cuivre, une poudre d'acier inoxydable, une poudre d'un alliage de titane, une poudre d'inconel, ou une poudre d'acier... Par exemple, il peut s'agir d'un alliage alpha/bêta comme Ti-6Al-4V (TA6V), d'un alliage alpha comme TA5E (5% Al et 2% Sn), ou encore d'un alliage bêta comme TV13CA (13% Vanadium, 11% Chrome et 3% d'Aluminium), ou encore d'un alliage Inconel® tel que l'Inconel 600, l'Inconel 625 ou l'Inconel 718.

Selon une autre variante, la poudre est une poudre de céramique. Par exemple la poudre est une poudre oxyde de fer.

La poudre représente au moins 35% volumique pour obtenir une pièce dense après traitement thermique. De préférence, la poudre représente de 35% à 65% volumique, et plus préférentiellement de 35% à 60% volumique, par exemple de 40% à 60% volumique ou de 35% à 55% volumique, et encore plus préférentiellement de 40% à 55% volumique de la pâte. Ce pourcentage est aussi appelé taux de charge. De tels taux de charge conduisent à une bonne répartition de la poudre au sein du polymère, et à une quantité suffisante de précipité, répartis de façon homogène au sein de la matrice métallique ou céramique. En fonction des propriétés mécaniques recherchées, l'homme du métier choisira le taux de charge adapté.

Les particules formant la poudre métallique ou en céramique ont, de préférence, un diamètre inférieur à 50µm, par exemple de 49µm, encore plus préférentiellement inférieur à 45µm, et encore plus préférentiellement inférieur à 30µm. Par exemple, les particules ont un diamètre inférieur à 25µm. Les particules métalliques ont un diamètre supérieur à 5µm, par exemple supérieur ou égal à 8µm. Le diamètre des particules va, par exemple de 5µm à 25µm ou encore de 8µm à 25µm. Les particules ont, par exemple, un diamètre de 8µm, de 14µm ou de 24µm. Les particules en céramique peuvent avoir des dimensions inférieures, par exemple inférieures à 5µm.

Il est préférable que la taille des particules métalliques ou céramiques soit inférieure à l'épaisseur de la couche formée lors de l'étape a1).

De préférence, les particules sont sphériques pour, d'une part, conférer à la résine une meilleure réactivité et, d'autre part, pour avoir une pièce finale ayant une meilleure compacité.

La pâte comprend un ou plusieurs précurseurs de la première résine. Par précurseur, on entend des monomères et/ou des oligomères et/ou des pré-polymères menant à la formation du polymère. A titre illustratif, pour le procédé SLA, peuvent être cités les monomères et oligomères de type époxyde (aussi appelé « époxy »), acrylate, uréthane acrylate, polyéther acrylate, polyéther acrylate modifié par une amine, époxy acrylate ou encore polyesteracrylate. Il peut aussi s'agir, par exemple, de morpholinobutyrophénone, de phénylacétophénone, ou encore de phosphine oxyde.

Avantageusement, on choisira un acrylate fonctionnel, par exemple un uréthane acrylate, un polyetheracrylate modifié par une amine, un époxyacrylate ou encore un polyesteracrylate, ou un mélange de ceux-ci. Ils contribuent au mouillage de la résine sur les particules.

Avantageusement, la pâte comprend également un diluant réactif de type acrylique pour ajuster la viscosité et le taux de degré de réticulation. Le diluant réactif acrylique peut être un composé tel que défini dans la formule suivante : 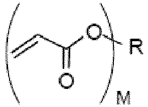 avec :
R un groupe polyvalent, par exemple, de type hydrocarbure, polyalkylether, ou polyol alkoxylé ;
M un nombre entier, dépendant du groupe R.

A titre illustratif, le diluant réactif peut être choisi parmi le 1,6-hexanediol diacrylate (HDDA), le Trimethylolpropane triacrylate (TMPTA), le tripropylglycoltriacrylate (TPGDA), le glycéryl triacrylate propoxylé (GPTA).

La pâte comprend, en outre, un ou plusieurs initiateurs de polymérisation. Dans le cas de la stéréolithographie, l'initiation de la polymérisation des acrylates est obtenue par l'absorption de lumière ultraviolette. Les amorceurs des acrylates sont de type radicalaire et leur choix est guidé principalement par la longueur d'onde de la source lumineuse qu'ils doivent absorber. Leur sélection relève clairement des compétences de l'homme du métier de même que l'ajustement de leur quantité.

Il est rappelé que la gamme UV va d'une longueur d'onde 100nm à 450nm. Les UVC permettent de réticuler en surface des matériaux, les UVB pénètrent dans la couche et les UVA compris entre 315nm et 400nm permettent de réticuler une couche épaisse ayant, par exemple, une épaisseur supérieure à 20 µm et inférieure à 20mm. Dans le cadre de l'invention, la source lumineuse a, avantageusement, une longueur d'onde fixée à 365nm.

Des photoamorceurs convenant pour les précurseurs de type acrylate sont de la famille des acétophénones ou des alkoxyacétophénones comme le 2,2'-diméthoxy-2-phénylacétophénone (par exemple, l'Irgacure 651 de IGM) ; de la famille des alkylaminoacétophénones comme la 2-Benzyl-2-(diméthylamino)-4'-morpholinobutyrophénone (par exemple, Irgacure 369 de IGM) ou la 2-Méthyl-4'-(méthylthio)-2-morpholinopropiophénone (par exemple, Irgacure 907 de IGM); ou de la famille des hydroxyalkylphénones comme la 2-hydroxy-2-méthyl-1-phényl-propane-1-one (par exemple, Darocure 1173 de IGM). Il peut également s'agit de dérivé de phosphine-oxyde tel que le Phenylbis(2,4,6-trimethylbenzoyl)phosphine oxide (par exemple, Irgacure 819 de CIBA). Il est préférable d'utiliser des photoamorceurs qui agissent en profondeur. L'action des photoamorceurs (réaction en profondeur ou en surface) peut être identifiée par l'homme de l'art.

D'autres éléments peuvent être ajoutés à la pâte, comme un agent mouillant, un agent de rhéologie, etc.

Les différents constituants sont mélangés pour obtenir une pâte chargée homogène. La pâte peut être homogénéisée au tricylindre.

L'homme du métier choisira la viscosité de la pâte, par exemple, en fonction des techniques de dépôt utilisée.

Le comportement à seuil de la pâte est, avantageusement, de type rhéofluidifiant Herschel Bulkley (n<1) ou fluide de Bingham.

On pourra choisir une pâte ayant une viscosité supérieure à 5Pa.s et de préférence supérieure ou égale à 10Pa.s à 100s⁻¹ à 25°C. La viscosité de la pâte peut être mesurée avec un dispositif de type plan-plan ou cône-plan. La viscosité est, par exemple, mesurée avec un rhéomètre MCR300.

A titre illustratif, la viscosité de la pâte peut être mesurée avec un dispositif tête cône/plan CP50/1, ayant une distance entre les plateaux de 100µm, et en effectuant un pré-cisaillement de 3min à 2s⁻¹, puis une montée en 5min avec des taux de cisaillement de 2 -200s⁻¹ et retour en 5min jusqu'à 2s⁻¹.

Avantageusement, la pâte est élaborée à température ambiante (20-25°C).

La pâte comprend par exemple :
- 40% à 55% volumique de poudre,
- 0,1% à 10% et, de préférence, de 1% à 10% volumique d'un ou plusieurs photoamorceurs,
- de 40% à 60% volumique d'une ou plusieurs résines photopolymérisables, par exemple un mélange de résine acrylate, uréthane acrylate et acrylate modifié par une amine,
- 0,5% à 10% et de préférence de 2% à 10% en poids par rapport à la poudre métallique d'additif optique.

La pièce est réalisée en formant une succession de couches de pâte allant de 10µm à 200µm, et de préférence de 20µm à 200µm d'épaisseur (étape a1), photopolymérisées par exemple avec un laser ou par traitement numérique de la lumière (ou DLP pour « digital light processing ») (étape a2).

Les pièces formées par SLA peuvent présenter des formes complexes, avec des cavités de tailles et formes variées.

La pièce peut être mise en forme, par stéréolithographie, à température ambiante.

### Traitements thermiques de la pièce :

Lors de la mise en forme (étape a), la résine sert de liant à la pièce crue (aussi appelée pièce verte) et assure la cohésion.

Ce liant est ensuite éliminé lors de l'étape de déliantage (étape b), pour obtenir une pièce déliantée, dite pièce brune, sous forme de squelette métallique.

Puis la pièce est frittée pour obtenir la pièce finale.

Le traitement thermique appliqué à la pièce formée de particules métalliques dispersées dans la résine est, avantageusement, réalisé avec de faibles rampes de température (inférieures ou égales à 3°C/min, et de préférence de l'ordre de 1°C/min) pour éviter toute altération de la pièce et l'apparition de fissures. Une telle montée en température est, avantageusement, réalisée sur une plage de 50°C avant la température de déliantage T_{d}. Elle peut également être réalisée sur une plage plus grande, par exemple sur une plage, de 100°C, de 200°C ou encore de la température ambiante (20-25°C) à la température de déliantage. A titre illustratif, si la température de déliantage est de 400°C, une faible montée en température, comme par exemple une montée en température de 1°C/min, sera réalisée de 350°C à 400°C.

Un ou plusieurs paliers en température seront, avantageusement, réalisés avant la température T_{d} de déliantage. Avantageusement, un palier peut être réalisé à T₁=T_{d}-50°C et/ou T₂=T_{d}-100°C. La durée des paliers est d'au moins 30 minutes, de préférence, d'au moins une heure, et encore plus préférentiellement d'au moins deux heures. Les paliers peuvent avoir des durées différentes. Par exemple, pour une température de déliantage de 450°C, un premier palier peut être réalisé à 350°C pendant 30 minutes et un deuxième palier peut être réalisé à 400°C pendant 2h.

Un palier en température est, avantageusement, réalisé à la température T_{f} pendant une durée d'au moins 30 minutes, et de préférence, d'au moins une heure, et encore plus préférentiellement pendant une durée d'au moins deux heures.

Les températures T_{d} de déliantage et T_{f} de frittage seront définies par l'homme du métier en fonction des résines et des particules métalliques ou des particules en céramique choisies.

L'homme du métier pourra également choisir le nombre de paliers ainsi que la température et la durée des paliers. Ces paramètres peuvent également être déterminés en fonction du taux de charge et de la morphologie des poudres.

Par exemple, la température de déliantage T_{d} est comprise dans la gamme allant de 300°C à 700°C, de préférence de 300°C à 600°C. La température de déliantage est généralement déterminée par Analyse thermogravimétrique (ATG) puis le cycle rampe et temps de pallier est ajusté pour limiter les fissurations dues aux dégagements gazeux des liants.

La température de frittage T_{f} est, par exemple, comprise dans la gamme allant de 1000°C à 1400°C, et avantageusement de 1200°C à 1300°C. Elle est par exemple de 1250°C. Classiquement, la température de frittage est évaluée par dilatométrie. Elle sera choisie par l'homme du métier en fonction des particules utilisées.

Les traitements thermiques peuvent être réalisés sous vide, par exemple, à une pression inférieure à 1.10⁻⁵mbar ou encore sous argon, à la pression atmosphérique (environ 1bar) ou à une pression partielle de 400 à 800mbar. Les traitements peuvent également être réalisés sous air.

Avantageusement, une rampe de température en descente est également réalisée. Par exemple, il s'agit d'une rampe en température inférieure à 5°C/min ou selon une variante d'une rampe en température de 5 à 10°C/min.

Les pièces métalliques ou en céramique, jusque-là, essentiellement limitées au domaine de l'aérospatial, à cause des coûts pourront trouver, grâce au procédé de l'invention, des applications dans de nouveaux domaines d'application, comme l'automobile, les équipements industriels, ou encore les loisirs.

### Exemple illustratif et non limitatif d'un mode de réalisation d'une pièce en cuivre par SLA :

En premier lieu, une pâte est élaborée. Elle comprend :
- 5% volumique de 1,6-hexanediol diacrylate (HDDA),
- 21% volumique de polyéther acrylate modifié par une amine (PEAAM),
- 20% volumique d'oligomère uréthane acrylate,
- 2% volumique de 2,2-Diméthoxy-2-phénylacetophénone,
- 2% volumique de Phénylbis (2,4,6-trimethyl-benzoyl)phosphine oxide,
- 45% volumique de particules de cuivre ayant une granulométrie inférieure à 45µm,
- un additif optique : des particules de Polypropylène de 1µm à 2µm de diamètre, représentant 5% en poids par rapport aux particules de cuivre.

Le polypropylène est classiquement commercialisé soit sous forme de granulés soit sous forme de particules (poudre). Les granulés ont, généralement, une dimension de l'ordre de quelques millimètres, par exemple 3-5mm. La taille médiane (d50) des particules va de 8 à 12µm, et le d90 est de 31µm. Ces dimensions sont du même ordre de grandeur voire supérieures à celles des particules métalliques, ce qui peut après traitement thermique (étape de déliantage) créer des pores de tailles importantes dans la pièce. La taille des particules de PP utilisées est donc réduite jusqu'à être inférieure à 2µm.

Cette réduction de taille peut être obtenue en introduisant les particules ou des granulés de polypropylène dans un ballon contenant du xylène, et placé dans un montage à reflux. La température est augmentée jusqu'à 120°C, jusqu'à ce que le liquide initialement trouble devienne limpide. Les particules métalliques sont ensuite ajoutées en quantité suffisante pour obtenir le pourcentage massique souhaité en PP dans les particules métalliques. Le mélange est ensuite homogénéisé 1h à 120°C (pour la poudre) et à 140°C (pour les granulés) puis refroidi. La suspension est filtrée et séchée à l'étuve pour éliminer le solvant. Le produit obtenu est sous la forme d'un agglomérat. Celui-ci est broyé à l'aide d'un mortier afin d'obtenir un mélange poudre d'intérêt /PP. Finalement, la poudre est introduite dans une résine photoréticulable. La formulation ainsi obtenue est réactive et stable dans le temps

Comme représenté sur le graphique de la figure 1, l'ajout d'un additif optique, ici des particules de propylène, dans la formulation d'une pâte telle que définie ci-dessus, et contenant une poudre de cuivre, permet d'améliorer sa réactivité. Avec l'ajout d'un additif optique, des réactivités inférieures à 30s, et même inférieures à 5s, sont obtenues. Il est, par exemple, possible de réticuler des couches de pâte de 50µm en 1s et d'avoir une cohésion accrue entre les couches.

En parallèle des polyéthylènes LLDPE et HDPE, hydrocarbures de poids moléculaires élevés ont été testés. Ces deux polymères sont utilisés en injection. Le LLDPE (polyéthylène à basse densité linéaire) a un nombre important de branches courtes et une densité de 0,91 à 0,94 g/cm³. Le HDPE (polyéthylène à haute densité) présente une faible ramification de ses chaînes polymères et une densité de 0,941 au 0,965 g/cm3.

Ces polyéthylènes sous forme de granulés sont préparés selon le même protocole que celui utilisé pour les granulés de PP.

Les agglomérats obtenus après séchage sont soumis à une étape de broyage à sec, dans un bol de broyage, pour obtenir des poudres. Les poudres sont ensuite introduites dans des résines photoréticulables. Les formulations durcissent dans le pot (1 nuit). Ces formulations ne sont donc pas stables dans le temps en comparaison avec les formulations contenant le mélange poudre d'intérêt / PP.

## Revendications

1. Pâte, destinée à être utilisée dans un procédé de stéréolithographie pour fabriquer une pièce métallique ou en céramique, comprenant une poudre de particules métalliques ou en céramique, un ou plusieurs précurseurs photopolymérisables d'une première résine, un photoamorceur et un additif optique,
l'additif optique étant choisi parmi la silice, un polythiophène, un alcool polyvinylique, un polypropylène, et une seconde résine de type acrylate, préalablement réticulée et broyée,
l'additif optique représente de 0,1% à 20% en poids par rapport à la poudre de particules métalliques ou en céramique.

2. Pâte selon la revendication 1, **caractérisée en ce que** l'additif optique est sous forme de particules, les particules ayant une plus grande dimension inférieure à 20µm, et de préférence inférieure ou égale à 10µm.

3. Pâte selon la revendication précédente, **caractérisée en ce que** l'additif optique est sous forme de particules, les particules ayant une plus grande dimension inférieure ou égale à 2µm.

4. Pâte selon l'une quelconque des revendications précédentes, **caractérisée en ce que** l'additif optique est du polypropylène.

5. Pâte selon l'une quelconque des revendications précédentes, **caractérisée en ce que** les particules métalliques ou en céramique ont une plus grande dimension inférieure à 45µm, et de préférence inférieure à 25µm.

6. Pâte selon l'une quelconque des revendications précédentes, **caractérisée en ce que** la poudre de particules métalliques ou en céramique représente au moins 35% volumique de la pâte, et de préférence de 40% à 60% volumique.

7. Pâte selon l'une quelconque des revendications précédentes, **caractérisée en ce que** le ou les précurseurs photopolymérisables de la première résine sont de type acrylate, uréthane acrylate, polyétheracrylate modifié par une amine, époxyacrylate ou polyesteracrylate.

8. Pâte selon l'une quelconque des revendications précédentes, **caractérisée en ce qu'**elle comprend :
- 40% à 50% volumique de poudre de particules métalliques ou en céramique,
- 40% à 60% volumique d'un ou plusieurs précurseurs photopolymérisables d'une première résine,
- 0,1% à 10% volumique de photoamorceur,
- 0,5% à 10% en poids par rapport à la poudre de particules métalliques ou en céramique d'additif optique, l'additif optique étant de préférence du polypropylène, ou une seconde résine de type acrylate préalablement réticulée et broyée.

9. Procédé de fabrication d'une pièce métallique ou en céramique comprenant au moins les étapes successives a), b), c) suivantes :
a) Mise en forme d'une pièce par stéréolithographie, la mise en forme étant réalisée en :
a1) formant une couche de pâte, telle que définie dans l'une quelconque des revendications 1 à 8,
a2) photopolymérisant le ou les précurseurs photopolymérisables de la première résine,
les étapes a1) et a2) formant un cycle pouvant être répété plusieurs fois,
b) Réalisation d'un premier traitement thermique à une première température T_{d} de manière à éliminer la première résine,
c) Réalisation d'un second traitement thermique à une deuxième température T_{f}, supérieure à la première température T_{d}, de manière à fritter les particules métalliques ou en céramique pour obtenir une pièce métallique ou en céramique.

10. Procédé selon la revendication 9, **caractérisée en ce que** la couche de pâte formée à l'étape a1) à une épaisseur allant de 20µm à 200µm.

11. Procédé selon l'une des revendications 9 et 10, **caractérisé en ce que** l'étape a2) est réalisée sous irradiation UV pendant une durée inférieure à 30s, de préférence inférieure à 10s, et encore plus préférentiellement inférieure à 2s.

12. Procédé selon l'une quelconque des revendications 9 à 11, **caractérisé en ce que** la couche de pâte a une épaisseur allant de 30µm à 50µm et **en ce que** l'irradiation UV est réalisée pendant une durée de 0,5s à 1s.

13. Procédé selon l'une quelconque des revendications 9 à 12, **caractérisé en ce que** l'étape a2) est réalisée avec un laser ou par traitement numérique de la lumière.

## Patentansprüche

1. Paste, welche dazu bestimmt ist, in einem stereolithographischen Verfahren zur Herstellung eines Metall- oder Keramik-Teils verwendet zu werden, umfassend ein Pulver aus Metall- oder Keramikpartikeln, einen oder mehrere photopolymerisierbare Vorläufer eines ersten Harzes, einen Photoinitiator und einen optischen Zusatzstoff, wobei
der optische Zusatzstoff gewählt ist aus Siliciumdioxid, einem Polythiophen, einem Polyvinylalkohol, einem Polypropylen und einem zweiten Harz vom Acrylattyp, das zuvor vernetzt und gemahlen wurde,
wobei der optische Zusatzstoff bezogen auf das Pulver aus Metall- oder Keramik-Partikeln 0,1 bis 20 Gew.-% ausmacht.

2. Paste nach Anspruch 1, **dadurch gekennzeichnet, dass** der optische Zusatzstoff in Form von Partikeln vorliegt, wobei die Partikel eine größere Abmessung kleiner 20 µm, und bevorzugt kleiner gleich 10 µm aufweisen.

3. Paste nach dem vorhergehenden Anspruch, **dadurch gekennzeichnet, dass** der optische Zusatzstoff in Form von Partikeln vorliegt, wobei die Partikel eine größere Abmessung kleiner gleich 2 µm aufweisen.

4. Paste nach einem der vorhergehenden Ansprüche, **dadurch gekennzeichnet, dass** der optische Zusatzstoff Polypropylen ist.

5. Paste nach einem dervorhergehenden Ansprüche, **dadurch gekennzeichnet, dass** die Metall- oder Keramikpartikel eine größere Abmessung kleiner 45 µm und bevorzugt kleiner 25 µm aufweisen.

6. Paste nach einem der vorhergehenden Ansprüche, **dadurch gekennzeichnet, dass** das Pulver aus Metall- oder Keramikpartikeln wenigstens 35 Vol.-% der Paste und bevorzugt 40 bis 60 Vol.-% ausmacht.

7. Paste nach einem der vorhergehenden Ansprüche, **dadurch gekennzeichnet, dass** der oder die photopolymerisierbaren Vorläufer des ersten Harzes vom Acrylattyp, Urethanacrylat, aminmodifiziertes Polyetheracrylat, Epoxyacrylat oder Polyesteracrylat sind.

8. Paste nach einem der vorhergehenden Ansprüche, **dadurch gekennzeichnet, dass** sie umfasst:
- 40 bis 50 Vol.-% Pulver aus Metall- oder Keramikpartikeln,
- 40 bis 60 Vol.-% eines oder mehrerer photopolymerisierbarer Vorläufer eines ersten Harzes,
- 0,1 bis 10 Vol.-% Photoinitiator,
- bezogen auf das Pulver aus Metall- oder Keramik-Partikeln 0,5 bis 10 Gew.-% optischen Zusatzstoff, wobei der optische Zusatzstoff bevorzugt Polypropylen ist, oder ein zweites Harz vom Acrylattyp, das zuvor vernetzt und gemahlen wurde.

9. Verfahren zur Herstellung eines Metall- oder Keramik-Teils, welches wenigstens die folgenden aufeinanderfolgenden Schritte a), b), c) umfasst:
a) Formgebung eines Teils durch Stereolithographie, wobei die Formgebung durchgeführt wird durch:
a1) Bilden einer Pastenschicht, wie in einem der Ansprüche 1 bis 8 beschrieben,
a2) Photopolymerisation des/der photopolymerisierbaren Vorläufer des ersten Harzes, wobei die Schritte a1) und a2) einen Zyklus bilden, der mehrmals wiederholt werden kann,
b) Durchführen einer ersten Wärmebehandlung bei einer ersten Temperatur T_{d}, um das erste Harz zu entfernen,
c) Durchführen einer zweiten Wärmebehandlung bei einer zweiten Temperatur T_{f}, die höher ist als die erste Temperatur T_{d}, um die Metall- oder Keramikpartikel zu sintern, um ein Metall- oder Keramik-Teil zu erhalten.

10. Verfahren nach Anspruch 9, **dadurch gekennzeichnet, dass** die in Schritt a1) gebildete Pastenschicht eine Dicke im Bereich von 20 µm bis 200 µm aufweist.

11. Verfahren nach einem der Ansprüche 9 und 10, **dadurch gekennzeichnet, dass** Schritt a2) unter UV-Bestrahlung über einen Zeitraum von weniger als 30 s, bevorzugt weniger als 10 s und noch stärker bevorzugt weniger als 2 s durchgeführt wird.

12. Verfahren nach einem der Ansprüche 9 bis 11, **dadurch gekennzeichnet, dass** die Pastenschicht eine Dicke im Bereich von 30 µm bis 50 µm aufweist und dass die UV-Bestrahlung über einen Zeitraum von 0,5 s bis 1 s durchgeführt wird.

13. Verfahren nach einem der Ansprüche 9 bis 12, **dadurch gekennzeichnet, dass** der Schritt a2) mit einem Laser oder durch digitale Lichtverarbeitung durchgeführt wird.

## Claims

1. Paste, for use in a stereolithography method for manufacturing a metal or ceramic part, comprising a metal- or ceramic-particle powder, one or more photopolymerisable precursors of a first resin, a photoinitiator and an optical additive,
the optical additive being selected from silica, a polythiophene, a polyvinyl alcohol, a polypropylene and a second resin of the acrylate type, previously crosslinked and ground,
the optical additive represents from 0.1% to 20% by weight with respect to the metal- or ceramic-particle powder.

2. Paste according to claim 1, **characterised in that** the optical additive is in the form of particles, the particles having a largest dimension of less than 20 µm, and preferably less than or equal to 10 µm.

3. Paste according to the preceding claim, **characterised in that** the optical additive is in the form of particles, the particles having a largest dimension of less than or equal to 2 µm.

4. Paste according to any one of the preceding claims, **characterised in that** the optical additive is polypropylene.

5. Paste according to any one of the preceding claims, **characterised in that** the metal or ceramic particles have a largest dimension of less than 45 µm, and preferably less than 25 µm.

6. Paste according to any one of the preceding claims, **characterised in that** the metal- or ceramic-particle powder represents at least 35% by volume of the paste, and preferably from 40% to 60% by volume.

7. Paste according to any one of the preceding claims, **characterised in that** the photopolymerisable precursor or precursors of the first resin are of the acrylate, urethane acrylate, amine-modified polyether acrylate, epoxy acrylate or polyester acrylate type.

8. Paste according to any one of the preceding claims, **characterised in that** it comprises:
- 40% to 50% by volume metal- or ceramic-particle powder,
- 40% to 60% by volume one or more photopolymerisable precursors of a first resin,
- 0.1% to 10% by volume photoinitiator,
- 0.5% to 10% by weight, with respect to the metal- or ceramic-particle powder, optical additive, the optical additive preferably being polypropylene, or a second resin of the acrylate type previously crosslinked and ground.

9. Method for manufacturing a metal or ceramic part comprising at least the following successive steps a), b), c):
a) forming a part by stereolithography, the forming being performed by:
a1) forming a layer of paste, as defined in any one of claims 1 to 8,
a2) photopolymerising the photopolymerisable precursor or precursors of the first resin,
steps a1) and a2) forming a cycle that can be repeated several times,
b) performing a first heat treatment at a first temperature T_{d} so as to eliminate the first resin,
c) performing a second heat treatment at a second temperature T_{f}, higher than the first temperature T_{d}, so as to sinter the metal or ceramic particles in order to obtain a metal or ceramic part.

10. Method according to claim 9, **characterised in that** the layer of paste formed at step a1) has a thickness ranging from 20 µm to 200 µm.

11. Method according to one of claims 9 and 10, **characterised in that** step a2) is performed under UV irradiation for a period of less than 30 s, preferably less than 10 s, and even more preferably less than 2 s.

12. Method according to any one of claims 9 to 11, **characterised in that** the layer of paste has a thickness ranging from 30 µm to 50 µm and **in that** the UV irradiation is performed for a period of 0.5 s to 1 s.

13. Method according to any one of claims 9 to 12, **characterised in that** step a2) is performed with a laser or by digital light treatment.
